# EUROPEAN PATENT APPLICATION

(11) **EP 3 015 366 A1**
(43) Date of publication of application: **04.05.2016**
(21) Application number: 14190399.7
(22) Date of filing: 27.10.2014
(51) Int. Cl.: B64D 9/00, B64F 1/32

(54) **Aircraft cargo monitoring system and method for wirelessly monitoring aircraft cargo**

(71) Applicant: Airbus Operations GmbH, 21129 Hamburg (DE)
(72) Inventor: Johnsen, Nina, 21129 Hamburg (DE)
(74) Representative: Isarpatent

(57) **Abstract**

An aircraft cargo monitoring system (100) includes a controller (C) installed in an aircraft (A), the controller (C) having a transceiver module configured to transceive wireless communication and a cargo compartment information module configured to gather information about cargo (c11,c12,...c1k, c21,c22,...c2n) loaded into a cargo compartment (D1, D2) of the aircraft (A), and a wireless mobile control station (W) having an input/output module and being connected to the transceiver module via a wireless communication link (WC), the wireless mobile control station (W) configured to receive information about cargo (c11,c12,...c1k, c21,c22,...c2n) loaded into the cargo compartment (D1, D2) of the aircraft (A) via the wireless communication link (WC) and to display the information via the input/output module.

## Description

### TECHNICAL FIELD

The present invention relates to an aircraft cargo monitoring system and a method for wirelessly monitoring aircraft cargo, particularly using a mobile network node for managing the monitoring information.

### TECHNICAL BACKGROUND

Airlines have explored the potential for aircraft and flight crews exchanging data in real time with ground base staff and systems to enhance operational efficiency and safety of flight. Particularly for ground loading operations of cargo to be transported in aircraft, support, assistance and steering control for cargo items and their varying itinerary needs to be provided as efficiently as possible in order to decrease turnover times.

Communication between an aircraft and communication transceivers external to the aircraft, such as satellites, ground stations or towers, is usually facilitated by means of wireless communication terminals having an antenna and a transceiving modulator/demodulator on-board of the aircraft. Such wireless communication may be used to close a logistical chain between the aircraft, an airport and ground service centers. Items to be shipped by air are usually loaded onto specifically configured pallets or into specifically configured airfreight containers. Such pallets and containers are commonly referred to as Unit Load Devices ("ULDs"). ULDs are available in various sizes, shapes and capacities, and typically bear external markings that identify their type, maximum gross weight, tare weight, and other pertinent information. Since ULDs are typically loaded with cargo at locations that are distant from the immediate vicinity of an aircraft, some degree of logistic control needs to be exerted to guarantee the correct itinerary for the ULDs. Once having been transported to the correct aircraft, ULDs are moved about one of the cargo compartments within the aircraft until it reaches a final stowage position. Multiple ULDs may be brought onboard the aircraft, and each is placed in its respective stowed position.

The document Rajabi, A.; Tavassoli, M.; Mohammadi, S.; Javadi, M.: "RFID for Cargo and Passenger Automation and Control in Airline Industry", International Journal of Soft Computing and Engineering (IJSCE), ISSN: 2231-2307, Vol. 2 (5), November 2012 discloses an RFID tag based system for passenger and baggage control in airplanes. The document US 2006/0038077 A1 discloses an aircraft cargo locating system which determines the location and weight of aircraft cargo placed in unit loading devices by means of wireless tags being affixed to each of the loading devices. The system receives information from the tags, and from the information calculates the location of the loading devices and the weight of the loading devices.

However, there is a need for integration of control and information exchange regarding aircraft cargo between an aircraft and ground based cargo operations service providers.

### SUMMARY OF THE DISCLOSURE

One object of the invention is thus to provide solutions to improve logistic cargo chains at airports and ground operations centers which allow for tracking information, service updates, maintenance intervals, security levels and loading instructions to be easily combined, allocated and updated.

This object is achieved by an aircraft cargo monitoring system having the features of claim 1, and a method for wirelessly monitoring aircraft cargo having the features of claim 7.

A first aspect of the disclosure pertains to an aircraft cargo monitoring system, comprising a controller installed in an aircraft, the controller having a transceiver module configured to transceive wireless communication and a cargo compartment information module configured to gather information about cargo loaded into a cargo compartment of the aircraft, and a wireless mobile control station having an input/output module and being connected to the transceiver module via a wireless communication link, the wireless mobile control station configured to receive information about cargo loaded into the cargo compartment of the aircraft via the wireless communication link and to display the information via the input/output module.

According to a second aspect of the disclosure, a method for wirelessly monitoring aircraft cargo comprises gathering information about cargo loaded into a cargo compartment of the aircraft, transmitting the gathered information wirelessly from a controller installed in the aircraft to a wireless mobile control station via a wireless communication link, receiving the gathered information about cargo loaded into the cargo compartment of the aircraft via the wireless communication link at the wireless mobile control station, and displaying the gathered information via an input/output module of the wireless mobile control station.

According to an embodiment of the aircraft cargo monitoring system, the cargo compartment information module comprises an RFID detection module and/or an WiFi access point configured to detect RFID labels and/or WiFi or NFC signals of cargo items loaded into the cargo compartment of the aircraft.

According to another embodiment of the aircraft cargo monitoring system, the wireless mobile control station comprises a data management module configured to wirelessly receive cargo management data from an airport operations center.

According to another embodiment of the aircraft cargo monitoring system, the wireless mobile control station comprises a transceiver module configured to wirelessly exchange cargo information with the transceiver module of the controller of the aircraft.

According to another embodiment of the aircraft cargo monitoring system, the controller is configured to control power drive units in the cargo compartment of the aircraft, and wherein the wireless mobile control station is further configured to wirelessly transmit control signals for the power drive units to the controller.

According to another embodiment of the aircraft cargo monitoring system, the cargo compartment information module comprises an optical detection device configured to gather visual information about cargo loaded into the cargo compartment of the aircraft, and wherein the wireless mobile control station is further configured to display the visual information via the input/output module.

According to an embodiment of the method, gathering information comprises detecting the presence of RFID labels and/or WiFi or NFC signals of cargo items loaded into the cargo compartment of the aircraft.

According to a further embodiment of the method, the method may further comprise wirelessly receiving cargo management data from an airport operations center at data management module of the wireless mobile control station.

According to a further embodiment of the method, the method may further comprise wirelessly exchanging cargo information with the controller of the aircraft by the wireless mobile control station.

According to a further embodiment of the method, the method may further comprise controlling, by the controller, power drive units in the cargo compartment of the aircraft via control signals for the power drive units which are transmitted to the controller by the wireless mobile control station.

According to a further embodiment of the method, gathering information may comprise optically detecting visual information about cargo loaded into the cargo compartment of the aircraft, and displaying the information by the wireless mobile control station comprises displaying the visual information via the input/output module.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an aircraft cargo monitoring system according to an embodiment.
Fig. 2 schematically illustrates a mobile control station to be used in the aircraft cargo monitoring system of Fig. 1 according to another embodiment.
Fig. 3 schematically illustrates a controller to be used in the aircraft cargo monitoring system of Fig. 1 according to another embodiment.
Fig. 4 schematically illustrates a method for wirelessly monitoring aircraft cargo according to a further embodiment.

### DETAILED DESCRIPTION OF EMBODIMENTS

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Mobile control stations within the meaning of the present invention may be embodied with personal electronic devices (PEDs). Such PEDs comprise all electronic devices which may be employed for communication and/or office purposes. For example, PEDs may comprise all sorts of end terminals, such as laptops, mobile phones, smartphones, handheld devices, palmtops, tablet PCs, smart watches and Google® glasses.

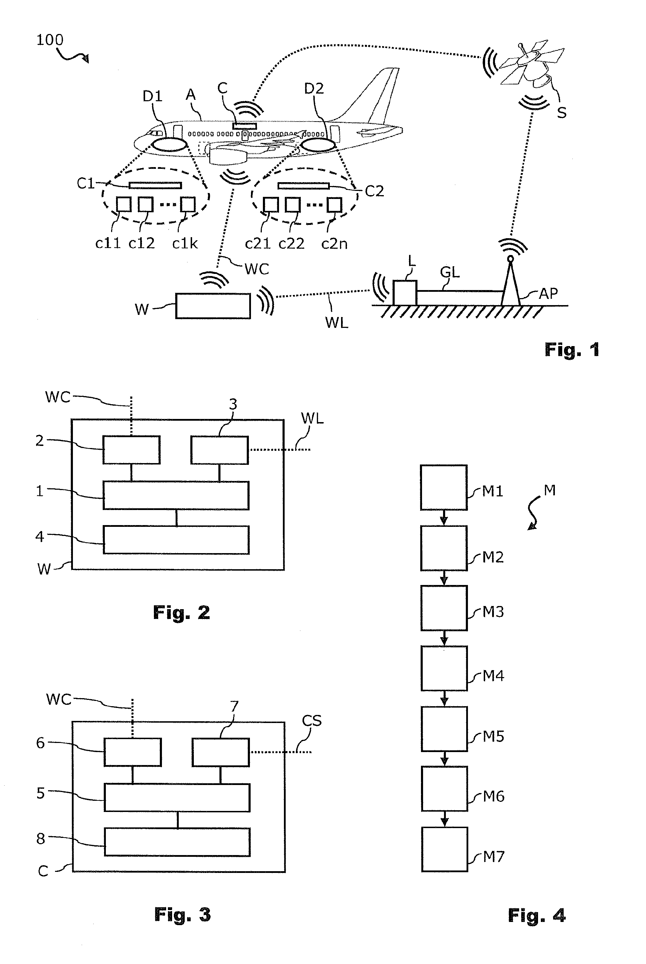

Fig. 1 shows a schematic illustration of an aircraft cargo monitoring system 100. The aircraft cargo monitoring system 100 may be used to monitor cargo within cargo compartments of an aircraft A, particularly cargo items already loaded into the cargo compartments of the aircraft A and cargo items yet to be loaded into the cargo compartments of the aircraft A. Only a single aircraft A is depicted herein for reasons of lucidity, however, any other number of further aircraft may be comprised within the aircraft cargo monitoring system 100 as well.

The aircraft A has a wireless controller C which comprises transceiver devices for transceiving wireless communication. Similarly, a plurality of ground-based network stations, such as an airport operations center L and an airport AP may have transceiver devices for transceiving wireless communication. The aircraft A, the airport operations center L and the airport AP may be connected in a wireless communications network, for example a UMTS network, an LTE network, a GPRS network or any other suitable telecommunications network. The airport operations center L and the airport AP may as ground-based network stations additionally or alternatively also be connected via a wirebound communications link GL. Moreover, the aircraft cargo monitoring system 100 may comprise one or more satellites S configured to provide satellite communication between the aircraft A and the ground-based network stations L and AP and taking part in the wireless communications network. The number of aircraft A and ground-based network stations L, AP is of course not limited to the depicted number in Fig. 1, but may be any number as suitable for the respective purpose and situation.

The controller C may be installed in the aircraft A which has at least one cargo compartment. In Fig. 1, the aircraft A is exemplarily depicted as having two cargo compartment D1, D2, however, any other number of cargo compartments may be equally possible. The cargo compartments D1, D2 may each comprise monitoring equipment such as webcams, surveillance cameras, RFID readers, barcode readers, wireless transceiver apparatuses and similar, generally denoted with the reference signs C1 and C2 in Fig. 1. The monitoring equipment C1 and C2 is connected to the controller C, for example by means of a wireless or wirebound communication link. The controller C is adapted to gather information about cargo loaded into a cargo compartment D1, D2 of the aircraft A, for example by accessing an RFID reader in the cargo compartment D1, D2 to read RFID labels of cargo items such as ULDs or luggage articles which are stowed in the cargo compartment D1, D2. Alternatively or additionally, it may also be possible to detect WiFi or Near Field Communication (NFC) signals from respective transmitters attached or otherwise associated with the cargo items, for example with a WiFi receiver or a NFC communication device in the cargo compartments D1, D2. The ULDs or luggage articles are generally denoted with reference signs c11, c12, c1k and c21, c22, c2n in the different cargo compartments D1, D2. The controller C may also access pictures and/or live streams of visual data recorded by webcams or surveillance cameras in the cargo compartment D1, D2.

Fig. 3 schematically illustrates a possible implementation of a controller C, for example the controller C as employed in the aircraft cargo monitoring system 100 of Fig. 1. The controller C has a transceiver module 6 configured to transceive wireless communication WC and a cargo compartment information module 7 configured to gather information CS about cargo loaded into the cargo compartments C1, C2 of an aircraft A. The transceiver module 6 and the cargo compartment information module 7 are both connected to a central processor 5 of the controller C which is configured to process the gathered information items and communication data. The controller C may further comprise a cargo compartment controller module 8 which can be used to control power drive units or similar devices used to convert electrical or hydraulic power into mechanical, for example rotary motion, and to drive a mechanical actuation system in the cargo compartment C1, C2 of the aircraft A.

The cargo compartment information module 7 may for example comprise an RFID detection module configured to detect RFID labels of cargo items loaded into the cargo compartment D1, D2 of the aircraft A, for example by means of utilizing RFID readers installed as monitoring equipment in the cargo compartments D1, D2. It may also be possible for the cargo compartment information module 7 to comprise WiFi access points or NFC readers. Alternatively or additionally, the cargo compartment information module 7 may also comprise an optical detection device configured to gather visual information about cargo loaded into the cargo compartment C1, C2 of the aircraft A, for example by means of utilizing webcams or surveillance cameras installed as monitoring equipment in the cargo compartments D1, D2.

The controller C of Fig. 3 is in wireless communication with a wireless mobile control station W that is located outside the aircraft, for example on the airfield during cargo loading operations. The mobile control station W may for example be used by a cargo load operations manager as user who has the authority and responsibility to monitor the loading process for cargo items, such as the cargo items c11, c12, c1k and c21, c22, c2n in Fig.1.

Fig. 2 exemplarily depicts a functional block diagram of a wireless mobile control station W for use in an aircraft cargo monitoring system, such as the aircraft cargo monitoring system 100 shown and explained in conjunction with Fig.1. As exemplarily shown in Fig. 2, the wireless mobile control station W may have a transceiver module 2 which is connected to the transceiver module 6 of the controller C via a wireless communication link WC. Via the wireless communication link WC, the wireless mobile control station W is able to wirelessly exchange cargo information with the transceiver module 6 of the controller C of the aircraft A. Moreover, the wireless mobile control station W may comprise a data management module 3 that is configured to wirelessly receive cargo management data CS, for example from an airport operations center L. The cargo management data CS may for example comprise information about the loading plan of a specific aircraft, such as the aircraft A. The cargo management data CS may for example comprise ordered lists of separate cargo items associated with additional itinerary and/or personal data, such as destination airport, cargo owner, boarding pass number, weight, physical dimensions, aircraft identification, flight selection and so on. It may also be possible to provide a search functionality for the wireless mobile control station W that enable a user to search for one or more entries in the list of cargo management data CS and to display the search result on a display of the wireless mobile control station W.

The wireless mobile control station W comprises a processor 1 that is connected to both the transceiver module 2 and the data management module 3, which processor 1 may run an operating system. The wireless transceiver module 2 may be controlled by an operating system of the wireless mobile control station W, such as Windows®, Unix®, Linux®, Android®, iOS® or any other suitable operating system. The wireless transceiver module 2 may be accessible by a communication application of the wireless mobile control station W, such as a web browser, an email client, a media streaming application or any other type of software application installed on the wireless mobile control station W. Wireless communication may be directly establishing using a wireless network link according to a given network communication protocol, such as one of the IEEE 802.11 standards.

The wireless mobile control station W may further comprise an input/output module 4 which may comprise a display, such as a graphical touchscreen, and further input/output peripherals, such as a mouse, a keyboard, a touchpad or similar. The input/output module 4 may be used by the wireless mobile control station W to display received information about cargo loaded into the cargo compartment D1, D2 of the aircraft A via the wireless communication link WC.

The input/output module 4 may further be used to display a graphical representation of information about the loaded cargo items c11, c12, c1k and c21, c22, c2n of Fig. 1 which may be provided by the controller C and/or information about the cargo intended to be loaded according to the cargo management data CS. A user viewing the graphical representation on the display of the input/output module 4 may then for example initiate a controlling action in order to manipulate one or more of the cargo items c11, c12, c1k and c21, c22, c2n in the aircraft. The controlling action may be recognized by the processor 1, for example when detecting certain input motion on a touchscreen of the input/output module 4, and emit corresponding control signals to the controller C via the transceiver modules 2 and 6 and the corresponding wireless communication link WC. The controller C is then able to use the received control signals for controlling the power drive units of the cargo compartments D1, D2 in order to perform the desired manipulating action by the user.

The input/output module 4 may also be used to display visual information received by the wireless mobile control station W from the controller C. For example, the input/output module 4 may display still pictures or a live stream from webcams of surveillance cameras within the cargo compartments D1, D2 of the aircraft A.

Fig. 4 exemplarily illustrates a block diagram of a method M for wirelessly monitoring aircraft cargo, in particular using an aircraft cargo monitoring system 100 as illustrated in conjunction with Fig.1. The method M may further utilize a wireless mobile control station for an aircraft cargo monitoring system 100, such as the mobile control station W as illustrated and explained in conjunction with Fig. 2. The method M may comprise at M1 gathering information about cargo loaded into a cargo compartment D1, D2 of an aircraft A, for example by detecting the presence of RFID labels or WiFi or NFC signals of cargo items loaded into the cargo compartment D1, D2, or by optically detecting visual information about cargo loaded into the cargo compartment D1, D2. At M2, the gathered information is transmitted wirelessly from a controller C installed in the aircraft A to a wireless mobile control station W via a wireless communication link WC. At M3, the gathered information about cargo loaded into the cargo compartment D1, D2 of the aircraft A is received via the wireless communication link WC at the wireless mobile control station W. At M4, the gathered information may be displayed to a user of the wireless mobile control station W via an input/output module 4 of the wireless mobile control station W, for example in a graphical representation or as visual information such as still pictures or a live stream from the cargo compartment D1, D2.

At M5, the method M may further comprise wirelessly receiving cargo management data from an airport operations center L at data management module 3 of the wireless mobile control station W. At M6, the method may further comprise wirelessly exchanging cargo information with the controller C of the aircraft A by the wireless mobile control station W. Finally, at M7, the controller C may be used to control power drive units in the cargo compartment D1, D2 of the aircraft A via control signals for the power drive units which are transmitted to the controller C by the wireless mobile control station W.

The system and method of the invention advantageously enable a load operations manager at the ground, for example at an airfield, to easily access information regarding cargo to be loaded and/or already loaded in the aircraft. Tracking information, service updates, maintenance intervals, security levels and loading instructions may be easily combined, allocated and updated by use of the centralized wireless mobile control station W. The wireless mobile control station W at the same time facilitates access and interaction with the airport and associated airport operations and service centers or other infrastructure of cargo service providers and enables thereby a live stream LIR report to be stored on demand and digitally signed during the pilot handover or printed if preferred.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Processor
- 2: Transceiver module
- 3: Data management module
- 4: Input/Output module
- 5: Processor
- 6: Transceiver module
- 7: Cargo compartment information module
- 8: Cargo compartment controller module
- 100: Aircraft cargo monitoring system
- A: Aircraft
- AP: Airport
- C: Wireless controller
- C1: Cargo compartment transceiver
- C2: Cargo compartment transceiver
- c11: Cargo item
- c12: Cargo item
- c1k: Cargo item
- c21: Cargo item
- c22: Cargo item
- c2n: Cargo item
- CS: Cargo compartment communication link
- D1: Cargo compartment
- D2: Cargo compartment
- GL: Ground link
- L: Airport operations center
- M: Method
- M1: Method step
- M2: Method step
- M3: Method step
- M4: Method step
- M5: Method step
- M6: Method step
- M7: Method step
- S: Satellite
- W: Wireless mobile control station
- WC: Wireless link
- WL: Wireless link

## Claims

1. Aircraft cargo monitoring system (100), comprising:
a controller (C) installed in an aircraft (A), the controller (C) having a transceiver module (6) configured to transceive wireless communication and a cargo compartment information module (7) configured to gather information about cargo loaded into a cargo compartment (D1, D2) of the aircraft (A); and
a wireless mobile control station (W) having an input/output module (4) and being connected to the transceiver module (6) via a wireless communication link (WC), the wireless mobile control station (W) configured to receive information about cargo loaded into the cargo compartment (D1, D2) of the aircraft (A) via the wireless communication link (WC) and to display the information via the input/output module (4).

2. Aircraft cargo monitoring system (100) according to claim 1, wherein the cargo compartment information module (7) comprises an RFID detection module and/or an WiFi access point configured to detect RFID labels and/or WiFi or NFC signals of cargo items loaded into the cargo compartment (D1, D2) of the aircraft (A).

3. Aircraft cargo monitoring system (100) according to one of the claims 1 and 2,
wherein the wireless mobile control station (W) comprises a data management module (3) configured to wirelessly receive cargo management data from an airport operations center (L).

4. Aircraft cargo monitoring system (100) according to one of the claims 1 to 3,
wherein the wireless mobile control station (W) comprises a transceiver module (2) configured to wirelessly exchange cargo information with the transceiver module (6) of the controller (C) of the aircraft (A).

5. Aircraft cargo monitoring system (100) according to one of the claims 1 to 4,
wherein the controller (C) is configured to control power drive units in the cargo compartment (D1, D2) of the aircraft (A), and wherein the wireless mobile control station (W) is further configured to wirelessly transmit control signals for the power drive units to the controller (C).

6. Aircraft cargo monitoring system (100) according to one of the claims 1 to 5,
wherein the cargo compartment information module (7) comprises an optical detection device configured to gather visual information about cargo loaded into the cargo compartment (D1, D2) of the aircraft (A), and wherein the wireless mobile control station (W) is further configured to display the visual information via the input/output module (4).

7. Method (M) for wirelessly monitoring aircraft cargo, the method (M) comprising:
gathering (M1) information about cargo loaded into a cargo compartment (D1, D2) of the aircraft (A);
transmitting (M2) the gathered information wirelessly from a controller (C) installed in the aircraft (A) to a wireless mobile control station (W) via a wireless communication link (WC);
receiving (M3) the gathered information about cargo loaded into the cargo compartment (D1, D2) of the aircraft (A) via the wireless communication link (WC) at the wireless mobile control station (W); and
displaying (M4) the gathered information via an input/output module (4) of the wireless mobile control station (W).

8. Method (M) according to claim 7, wherein gathering (M1) information comprises detecting the presence of WiFi or NFC signals and/or RFID labels of cargo items loaded into the cargo compartment (D1, D2) of the aircraft (A).

9. Method (M) according to one of the claims 7 and 8, further comprising:
wirelessly receiving (M5) cargo management data from an airport operations center (L) at data management module (3) of the wireless mobile control station (W).

10. Method (M) according to one of the claims 7 to 9, further comprising:
wirelessly exchanging (M6) cargo information with the controller (C) of the aircraft (A) by the wireless mobile control station (W).

11. Method (M) according to one of the claims 7 to 10, further comprising:
controlling (M7), by the controller (C), power drive units in the cargo compartment (D1, D2) of the aircraft (A) via control signals for the power drive units which are transmitted to the controller (C) by the wireless mobile control station (W).

12. Method (M) according to one of the claims 7 to 11, wherein gathering information comprises optically detecting visual information about cargo loaded into the cargo compartment (D1, D2) of the aircraft (A), and displaying the information by the wireless mobile control station (W) comprises displaying the visual information via the input/output module (4).
